# EUROPEAN PATENT SPECIFICATION

(11) **EP 2 028 139 B1**
(45) Date of publication and mention of the grant of the patent: **17.03.2010**
(21) Application number: 08380228.0
(22) Date of filing: 24.07.2008
(51) Int. Cl.: B65G 23/44

(54) **Hydraulic tensioning device for chains or belts for unloading trailers and the like**
Hydraulische Spannvorrichtung für Ketten oder Riemenförderer
Dispositif hydraulique de tension pour convoyeur à chaînes ou bande

(30) Priority: 22.08.2007 ES 200702320
(43) Date of publication of application: 25.02.2009
(73) Proprietor: Fernández Pascual, Francisco, 26191 Sorzano (La Rioja) (ES); Fernández Pascual, José Luis, 26191 Sorzano (La Rioja) (ES)
(72) Inventor: Martínez Chavoy, Álvaro, 26191 Sorzano (La Rioja) (ES); Fernández Pascual, José Luis, 26191 Sorzano (La Rioja) (ES)
(74) Representative: Maslanka, Dorota

(56) References cited:
- EP-A- 0 089 847
- GB-A- 793 229
- GB-A- 1 019 212
- US-A- 4 128 164
- US-A- 4 653 634

## Description

### Object of the Invention

The invention relates to a hydraulic tensioning device according to the preamble of claim 1.

Therefore, a first object of the invention is to maintain the required tension of the chains or belts and a second object is that when the expected required tension is exceeded, the movement and drive of the chains or belts is stopped as a safety measure to prevent failures and possible accidents.

It is applicable to chains and belts for unloading any trailer or semi-trailer that is not a tilting trailer, such that the movement of the chains or belts will drive the material backwards for its unloading.

It is particularly applicable to trailers for distributing manure in land used for agriculture, for example, although the device of the invention can be incorporated in conveyor chains and belts for any other application.

### Background of the Invention

Conveyor chains and belts currently incorporate certain systems for achieving required tension during their operation.

With time, such systems sometimes do not maintain the required tension proposed by the manufacturer either due to wear, misalignments or other reasons, resulting in a malfunction with the possibility of failures.

Particularly in case of chains and belts of trailers for unloading products carried therein, the problem is further worsened by the hard work conditions that such chains and belts are subjected to during their operation.

US 4,653,634 discloses a conveyor belt assembly, according to the preamble of claim 1, in which the tension of the conveyor belt can be adjusted, with the use of a hydraulic cylinder extending or retracting the frame members with respect to each other increasing or decreasing the tension upon the conveyor belt as load upon the belt increases or decreases. However said assembly does not provide for any safety measure to automatically stop the movement and drive of the conveyor belt to prevent failures and possible accidents.

Whereas GB 793,229 discloses tensioning means for belts or chains, in which the tractive force is being adapted to switch off the drive of the conveyor when a permissible tractive force is exceeded. Disclosed assembly incorporating electric drive motor to induce the movement of the conveyor belts, as well as electric circuit for its arrestment.

Therefore there is a need for a device, where required tension of the chains or belts can be effectively maintained, incorporating a hydraulic system for automatic stop in case the required tension is exceeded.

### Description of the Invention

For the purpose of achieving the objects and preventing the aforementioned drawbacks, the invention proposes a hydraulic tensioning device according to the appended claim 1.

It is also provided that when the tension exceeds this predetermined value the movement of the chain or belt is automatically stopped for the purpose of preventing possible failures and/or accidents.

The chains or belts are arranged on a horizontal platform of the trailer and are coupled to a rear drive shaft and a front tensioning shaft support on which the actual hydraulic tensioning device will be applied.

For that, the shaft support basically comprises a crossbar with rotating elements where the closed loop chains or belts are coupled at one of their ends, the opposite end being coupled to the drive shaft.

Based on this premise, the tensioning device consists of at least one oil hydraulic cylinder, the rod of which is connected to the crossbar of the assembly of the rear shaft support, which cylinder is fed from an oil hydraulic power unit incorporated in a towing vehicle driving the trailer, said power unit being able to be independent or having another suitable arrangement.

The cylinder is essentially a single-acting cylinder and is associated to a main circuit incorporating at least one adjustable pressure limiting valve, a non-return valve, a return valve through which the pressure of the circuit can be released by driving the oil to the tank.

The adjustable pressure limiting valve assures the force required by the cylinder to reach and maintain the tension on the chains or belts, the pressure of the oil inside the respective chamber of the cylinder being maintained for that purpose.

The non-return valve assures the tightness of the oil, preventing possible leaks which would evidently reduce the pressure of the fluid and therefore the required tension.

The circuit also incorporates a pressure gauge in order to visually control the pressure of the circuit, especially the maintained pressure of the cylinder.

Another feature of the invention relates to incorporation of an auxiliary circuit which automatically stops the operation of the belts or chains when the expected pressure in the cylinder is exceeded, failures and possible accidents thus being prevented.

This auxiliary circuit is associated to an oil hydraulic motor which is the element that provides mobility of the belts or chains for unloading, such that when an expected pressure is exceeded, the oil is directly diverted to a tank without passing through the motor.

For that, in a first embodiment a hydraulically piloted safety valve is arranged in parallel.

In a second embodiment the piloted valve could be replaced with an electro-valve and a pressure relay, which will send an electric signal to the electro-valve when it reaches a predetermined required pressure, thereby said electro-valve will change position directing the oil to the tank and the oil hydraulic motor moving the belts or chains therefore being stopped.

Therefore, the operation of the invention is that the tension of the chains always remains at the predetermined value established by the manufacturer and that a valve is provided in order to loosen them if needed. This means that the hydraulic cylinders must be supplied with oil at a specific pressure and that this pressure must be maintained constant, such that this pressure can be reduced whenever it is considered appropriate.

In order to facilitate better understanding of this specification, a set of figures is attached below forming an integral part thereof, said figures showing the object of the invention with an illustrative and non-limiting character.

### Brief Description of the Drawings

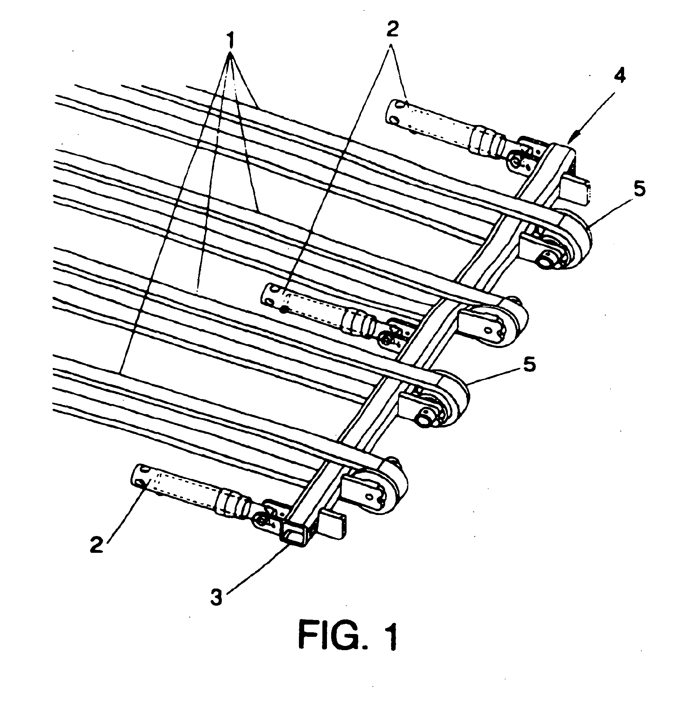

Figure 1 shows a view of part of a structure of chains or belts for unloading trailers and the like incorporating the hydraulic tensioning device, object of the invention.

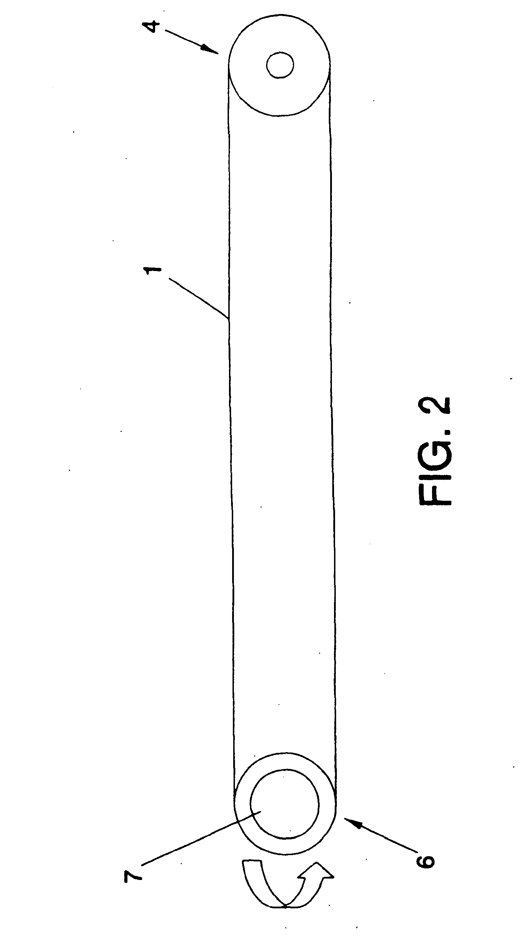

Figure 2 shows a view schematically depicting a rear drive shaft and a front shaft support on which each closed loop chain or belt is coupled. The tensioning device acts on the mentioned front shaft support.

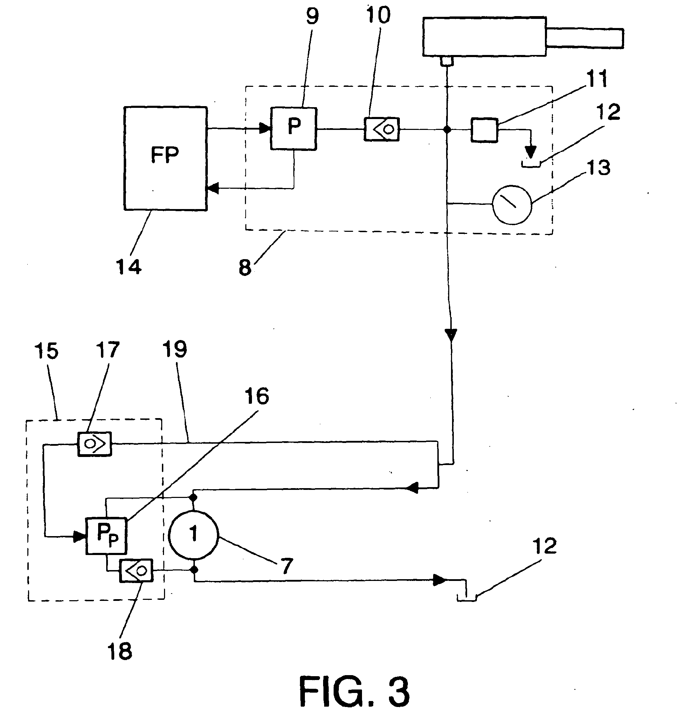

Figure 3 shows a view of the oil hydraulic circuit forming part of the invention.

### Description of the Preferred Embodiment

With reference to numerical indications used in the figures, the hydraulic tensioning device for chains or belts 1 for unloading trailers or the like consists of single-acting oil hydraulic cylinders 2, the rods of which are connected to a crossbar 3 forming part of a front shaft support 4 further incorporating idler rotating elements 5 where the ends of the closed loop belts or chains 1 are coupled, whereas the opposite ends are coupled to a rear drive shaft 6 which rotates by means of an oil hydraulic motor 7.

To maintain and assure the required tension of the belts or chains 1 by means of the mentioned cylinders 2, the latter are connected to a main circuit 8 including a pressure limiting valve 9, a non-return valve 10, a return valve 11 for returning oil to a tank 12 and a pressure gauge 13 for displaying the pressure.

Said main circuit 8 is connected to an oil hydraulic power unit 14.

The force necessary for tensioning the chain will be provided by means of the single-acting cylinders 2, whereas the pressure of the main hydraulic circuit 8 will be reduced by means of the return valve 11, through which the oil could be directly diverted' towards the tank 12.

To maintain the pressure in the main circuit 8, it will have in parallel the non-return valve 10, which will allow entrance of the oil to the circuit but not its exit.

The pressure will be applied to the circuit through the mentioned non-return valve 10, previously externally passing through the pressure limiting valve 9 by means of which the pressure of the circuit can be limited to the suitable value. There are several solutions in order to achieve the pressure reach the limiting valve, as it will be explained below.

The oil pressure in the circuit at all times can be seen either through the pressure gauge 13 or it can be monitored.

The oil pressure in the circuit of the tensioning cylinders 2 could also be optionally used in other applications, as it will be explained below.

Oil is supplied to the cylinders 2 by means of the oil hydraulic power system 14 and main circuit 8 at a pressure of about 170 bars, which is later limited to the suitable value for each trailer. The pressure of the circuit of the tensioning cylinders is usually comprised between 40 and 120 bars. The necessary flow rate is minimal since once the circuit is full it needs little oil to maintain the pressure.

There are several alternatives for feeding the circuit of the tensioning cylinders:
- a manual pump with its tank or cistern,
- direct feeding from the towing vehicle with return,
- feeding from another hydraulic circuit of the trailer that is able to supply that pressure and has return,
- pressurized header with membrane.

In any of the four cases, the operating scheme is the same. It is necessary to provide an initial pressure of about 170 bars. The mentioned initial pressure of 170 bars will reach the pressure limiting valve, such that the oil flow will flow out of the outlet of said limiting valve towards the tensioning cylinders 2 having the necessary pressure for their correct operation, whereas the excess flow will be returned to the tank or cistern 12.

On the other hand, an auxiliary oil hydraulic circuit 15 intended for automatically stopping the movement of the belts or chains 1 when a set pressure is exceeded has been provided.

Therefore, a considerable pressure increase of the hydraulic circuit of the tensioners 2 is a symptom of failure, either in the actual circuit or in the chains. In these circumstances it is advisable to stop the feed motor 7 of the chains 1. In order to automatically stop said motor 7 it is needed auxiliary hydraulic circuit 15 connecting with the main circuit 8 of the tensioners 2 with the circuit of the feed motor 7 of the chains 1. This auxiliary circuit 15 shall detect increase of pressure in the circuit of the tensioners 2 and act on the circuit of the feed motor when said increase occurs. This auxiliary circuit 15 can be a hydraulic or electro-hydraulic type circuit.

The auxiliary hydraulic circuit 15 includes a pressure-piloted valve 16 arranged in parallel with the oil hydraulic motor 7, such that when the (previously adjusted) pilot pressure is exceeded, the oil is diverted to tank 12 and no longer drives the motor 7 because the same is bridged and therefore stops when the oil flow is diverted to the tank 12 through normally closed said piloted valve 16.

The auxiliary circuit further incorporates two one-way non-return valves 17 and 18 for its correct operation: one valve 17 inserted in the pilot path 19 and the other valve 18 inserted between the output path of the motor 7 and the output path of the piloted valve 16.

In case of an electro-hydraulic auxiliary circuit, said circuit practically presents the same arrangement as the previous one with the difference that the hydraulically pressure-piloted valve 16 is replaced with an electro-valve in series. This new electro-valve, not depicted in the figures, will receive an electric signal through a pressure relay, which has not been depicted in the drawings either, such that it will be placed in the main circuit 8 and it will be tared to the expected suitable value, such that when the pressure relay reaches the pressure to which it has been tared, it will send a signal to the mentioned electro-valve in order to stop rotating of the motor 7 and this way to stop the operation of the belts or chains 1.

## Claims

1. Hydraulic tensioning device including closed loop chains or belts coupled by opposite ends to a rear drive shaft (6) and a front shaft support (4), said rear shaft (6) rotating by means of an oil hydraulic motor (7), said device incorporating a main circuit (8) and an auxiliary circuit (15) linked together and fed by a power system (14), said main circuit (8) supplying oil to at least one tensioning cylinder (2), the rods of which being connected to the front shaft support (4);
**characterized in that**
said main circuit (8) comprises at least:
- a pressure limiting valve (9);
- a non-return valve (10) fed by the pressure limiting valve (9) and allowing the oil to be supplied to the cylinder (2);
- an oil return valve (11) connecting the cylinder (2) to the tank (12);
and said auxiliary circuit (15) comprises:
- a pressure limiting valve (16) arranged in parallel with the motor (7); said valve being fed in oil by the non-return valve (10);
- a non-return valve (17) inserted in the pilot path (19) of the piloted valve (16) and allowing the oil to feed the piloted valve (16);
- a non-return valve (18) inserted between the output path of the motor (7) and the output path of the piloted valve (16) and allowing the oil to go from the piloted valve (16) to the motor (7).

2. Hydraulic tensioning device according to claim 1, wherein said piloted valve (16) is a hydraulically piloted valve.

3. Hydraulic tensioning device according to claim 1, wherein said piloted valve (16) is an electrically piloted valve and said main circuit additionally comprises a pressure relay which once it reaches the required pressure provided, it sends an electric signal to said electrically piloted valve, stopping the rotation of the motor (7).

4. Hydraulic tensioning device according to any one of the previous claims, wherein said at least one tensioning cylinder (2) is being associated to said main circuit (8), whereas said auxiliary circuit (15) is being associated to said oil hydraulic motor (7), both circuits interacting and allowing retention of said motor (7) in case the overpressure is detected by said pressure limiting valve (16).

## Patentansprüche

1. Hydraulische Spannvorrichtung, einschließlich geschlossener Schlingenketten oder -bänder, die an entgegengesetzten Enden an eine hintere Antriebswelle (6) und einen vorderen Wellenträger (4) gekoppelt sind, wobei sich die genannte hintere Welle (6) durch einen hydraulischen Ölmotor (7) dreht, wobei die genannte Vorrichtung einen Hauptkreislauf (8) und einen Hilfskreislauf (15) beinhaltet, die miteinander verbunden und durch ein Stromversorgungssystem (14) versorgt werden, wobei der genannte Hauptkreislauf (8) zumindest einem Spannzylinder (2) Öl zuführt, dessen Stangen mit dem vorderen Wellenträger (4) verbunden sind;
**dadurch gekennzeichnet, dass**
der genannte Hauptkreislauf (8) zumindest Folgendes umfasst:
- ein Druckbegrenzungsventil (9);
- ein Rückschlagventil (10), das von dem Druckbegrenzungsventil (9) versorgt wird und das es ermöglicht, dem Zylinder (2) Öl zuzuführen;
- ein Ölrücklaufventil (11), das den Zylinder (2) mit dem Tank (12) verbindet;
und dass der genannte Hilfskreislauf (15) Folgendes umfasst:
- ein Druckbegrenzungsventil (16), das parallel zu dem Motor (7) angeordnet ist; wobei das genannte Ventil von dem Rückschlagventil (10) mit Öl versorgt wird;
- ein Rückschlagventil (17), das in dem Steuerweg (19) des gesteuerten Ventils (16) eingesetzt ist und es dem Öl ermöglicht, das gesteuerte Ventil (16) zu versorgen;
- ein Rückschlagventil (18), das zwischen dem Ausgangsweg des Motors (7) und dem Ausgangsweg des gesteuerten Ventils (16) eingesetzt ist und das es ermöglicht, dass Öl von dem gesteuerten Ventil (16) zum Motor (7) fließt.

2. Hydraulische Spannvorrichtung nach Anspruch 1, bei der das genannte gesteuerte Ventil (16) ein hydraulisch gesteuertes Ventil ist.

3. Hydraulische Spannvorrichtung nach Anspruch 1, bei der das genannte gesteuerte Ventil (16) ein elektrisch gesteuertes Ventil ist und der genannte Hauptkreislauf zusätzlich einen Druckumsetzer umfasst, welcher, nachdem er den benötigten bereitgestellten Druck erreicht hat, ein elektrisches Signal zu dem genannten elektrisch gesteuerten Ventil sendet, wobei das Drehen des Motors (7) angehalten wird.

4. Hydraulische Spannvorrichtung nach einem der vorherigen Ansprüche, bei der der genannte zumindest eine Spannzylinder (2) mit dem genannten Hauptkreislauf (8) in Verbindung gebracht wird, während der genannte Hilfskreislauf (15) mit dem genannten hydraulischen Ölmotor (7) in Verbindung gebracht wird, wobei beide Kreisläufe zusammenarbeiten und ein Zurückhalten des Motors (7) ermöglichen, für den Fall, dass ein Überdruck von dem genannten Druckbegrenzungsventil (16) festgestellt wird.

## Revendications

1. Dispositif tendeur hydraulique incluant des chaînes ou courroies à boucle fermée accouplées par des extrémités opposées à un arbre d'entraînement arrière (6) et un support d'arbre avant (4), ledit arbre arrière (6) tournant au moyen d'un moteur hydraulique d'huile (7), ledit dispositif incorporant un circuit principal (8) et un circuit auxiliaire (15) unis ensemble et alimentés par un système d'alimentation (14), ledit circuit principal (8) alimentant en huile au moins un cylindre tendeur (2), les tringles duquel étant connectées au support d'arbre avant (4) ;
**caractérisé en ce que**
ledit circuit principal (8) comprend au moins :
- une valve de limitation de pression (9) ;
- un clapet de non-retour (10) alimenté par la valve de limitation de pression (9) et permettant que l'huile soit fournie au cylindre (2) ;
- une valve de retour d'huile (11) connectant le cylindre (2) au réservoir (12) ;
et ledit circuit auxiliaire (15) comprend :
- une valve de limitation de pression (16) disposée parallèlement au moteur (7) ; ladite valve étant alimentée en huile par le clapet de non retour (10) ;
- un clapet de non retour (17) inséré dans la trajectoire pilote (19) de la valve pilotée (16) y permettant que l'huile soit alimenté à la valve pilotée (16) ;
- un clapet de non retour (18) inséré entre la trajectoire de sortie du moteur (7) et la trajectoire de sortie de la valve pilotée (16) et permettant que l'huile se déplace dès la valve pilotée (16) vers le moteur (7).

2. Dispositif tendeur hydraulique selon la revendication 1, dans lequel ladite valve pilotée (16) est une valve pilotée de manière hydraulique.

3. Dispositif tendeur hydraulique selon la revendication 1, dans lequel ladite valve pilotée (16) est une valve pilotée électriquement y ledit circuit principal comprend, en outre, un relais de pression qui, une fois qu'il atteint la pression requise fournie, envoie un signal électrique à ladite valve pilotée électriquement, en arrêtant la rotation du moteur (7).

4. Dispositif tendeur hydraulique selon l'une quelconque des revendications antérieures, dans lequel ledit au moins un cylindre tendeur (2) est en train d'être associé audit circuit principal (8), tandis que ledit circuit auxiliaire (15) est en train d'être associé audit moteur hydraulique d'huile (7), les deux circuits agissant conjointement et permettant la retenue dudit moteur (7) en cas de surpression détectée par ladite valve de limitation de pression (16)
